# EUROPÄISCHE PATENTANMELDUNG

(11) **EP 1 467 225 A1**
(43) Veröffentlichungstag der Anmeldung: **13.10.2004**
(21) Anmeldenummer: 03100962.4
(22) Anmeldetag: 10.04.2003
(51) Int. Cl.: G01S 17/89, B60Q 1/48

(54) **Einparkhilfe für ein Fahrzeug**

(71) Anmelder: IEE International Electronics & Engineering S.A.R.L., 2632 Luxembourg (LU)
(72) Erfinder: BECKER, Guido, 66679, Losheim am See (DE); CASTILLO FRANCO, Marta, 5240, SANDWEILER (LU); MIRBACH, Bruno, 54329, KONZ (DE); MOUSEL, Thierry, 5637, Mondorf (LU); SCHIFFLERS, Marc, 4710, LONTZEN (BE); SCHMIZ, Marc, 2629, Luxembourg (LU)
(74) Vertreter: Beissel, Jean

(57) **Zusammenfassung**

Ein Verfahren zur Einparkhilfe für ein Fahrzeug, umfasst die Schritte Aufnahme von Umgebungsdaten im Außenbereich eines Fahrzeugs, Berechnung der Abmessungen eines bestimmten Bereichs unter Benutzung der aufgenommenen Umgebungsdaten, und Bewerten der Eignung des bestimmten Bereichs als Parklücke unter Benutzung der berechneten Abmessungen und bekannter, fahrzeugspezifischer Referenzwerte. Erfindungsgemäß umfasst die Aufnahme von Umgebungsdaten die Aufnahme von dreidimensionalen Umgebungsbilden mittels eines optischen 3D-Systems.

## Beschreibung

Die vorliegende Erfindung betrifft eine Einparkhilfe für ein Fahrzeug.

Um das Fahren mit dem Kraftfahrzeug zu erleichtern und Zusammenstösse mit Wagen oder anderen im Weg befindlichen Gegenständen zu verhindern, ist es bekannt, an der Front- und/oder Rückseite des Kraftfahrzeuges Sensoren vorzusehen, welche beispielsweise Ultraschall- oder Radarsignale aussenden und die von dem Hindernis reflektierten Signale wieder zu empfangen. Dabei wird der Abstand zwischen dem am Kraftfahrzeug angeordneten Sensor und dem Hindernis aus der Laufzeit des Signals vom Sensor zum Hindernis und wieder zurück bestimmt. Ein solches System ist beispielsweise aus der EP-A-0 984 300 bekannt. Derartige Systeme sind in der Lage dem Fahrer, z.B. beim Zurücksetzen des Fahrzeugs, Informationen über die Distanz zu einem hinter dem Wagen angeordneten Hindernis zu übermitteln. Allerdings können solche Systeme vor dem Einfahren in die Parklücke keine Hilfestellung bei der Einschätzung der Eignung dieser Parklücke liefern.

Die deutsche Patentanmeldung DE-A-38 44 340 beschreibt eine Vorrichtung zur Bestimmung der Abmessungen einer Parklücke. Die in diesem Dokument vorgeschlagene Vorrichtung umfasst mehrere am Kraftfahrzeug angebrachte Sensoren (Ultraschall-, Infrarot- oder Mikrowellensender und -Empfänger), die die geometrische Lage der Parklücke in Bezug auf das Kraftfahrzeug vermessen. Die Abmessungen der Parklücke werden durch trigonometrische Berechnungsverfahren oder durch Laufzeitunterschiede der optischen oder akustischen Signale bestimmt.

Das Dokument DE-A-100 45 616 beschreibt ein Verfahren zum automatischen Einparken eines Fahrzeugs, bei dem der vor und seitlich vor dem Fahrzeug liegende Umgebungsbereich mittels einer Videokamera aufgenommen wird. Dieses aufgenommene reale Bild mittels geeigneter Bildauswerteverfahren in eine Draufsicht umgerechnet wird, die dem Fahrer auf einem Bildschirm präsentiert wird. Anhand dieser Draufsicht kann der Fahrer dann eine Parklücke frühzeitig erkennen und diese zum Einparken auswählen. Ein Steuerungssystem des Fahrzeugs veranlasst dann, dass das Fahrzeug in eine für das automatische Einparken optimale Ausgangsposition gebracht wird und der Einparkvorgang kann auf bekannte Art und der Zuhilfenahme von Abstandsensoren ablaufen. Ein Problem bei dieser Vorrichtung besteht darin, dass das von der Videokamera aufgenommene Bild mittels aufwendiger Bildbearbeitungsverfahren analysiert werden muss, um eine Tiefeninformation bezüglich der freien Parklücke zu erhalten. Um eine verlässliche Tiefeninformation über die zur Verfügung stehende freie Tiefe der Parklücke erhalten, muss das aufgenommene Bild in der Tat rechnerisch in einen interessierenden Bildvordergrund und einen nicht relevanten Bildhintergrund getrennt werden. Diese Verarbeitung der aufgenommenen Bilder ist sich jedoch sehr rechnen intensiv unterfordert demzufolge eine entsprechend teurer Hardwareausstattung des Systems.

### Aufgabe der Erfindung

Aufgabe der vorliegenden Erfindung ist es folglich, ein besseres Verfahren zur Einparkhilfe sowie eine entsprechende Vorrichtung vorzuschlagen.

### Allgemeine Beschreibung der Erfindung

Diese Aufgabe wird erfindungsgemäß gelöst durch ein Verfahren nach Anspruch 1 bzw. eine Vorrichtung nach Anspruch 9 der vorliegenden Anmeldung.

Ein Verfahren zur Einparkhilfe für ein Fahrzeug, umfasst die Schritte Aufnahme von Umgebungsdaten im Außenbereich eines Fahrzeugs, Berechnung der Abmessungen eines bestimmten Bereichs unter Benutzung der aufgenommenen Umgebungsdaten, und Bewerten der Eignung des bestimmten Bereichs als Parklücke unter Benutzung der berechneten Abmessungen und bekannter, fahrzeugspezifischer Referenzwerte. Erfindungsgemäß umfasst die Aufnahme von Umgebungsdaten die Aufnahme von dreidimensionalen Umgebungsbilden mittels eines optischen 3D-Systems,

Dementsprechend umfasst eine Vorrichtung zur Einparkhilfe für ein Fahrzeug eine Sensoreinrichtung zur Aufnahme von Umgebungsdaten im Außenbereich eines Fahrzeugs, und eine Auswerteeinrichtung zur Berechnung der Abmessungen eines bestimmten Bereichs auf der Basis der aufgenommenen Umgebungsdaten und zur Bewerten der Eignung des bestimmten Bereichs als Parklücke auf der Basis der berechneten Abmessungen und bekannter, fahrzeugspezifischer Referenzwerte. Gemäss der vorliegenden Erfindung zeichnet sich ein solches System dadurch aus, dass die Sensoreinrichtung ein optisches 3D-Sensorsystem zur Aufnahme von dreidimensionalen Umgebungsbilden umfasst.

Ein optisches dreidimensionales System, wie beispielsweise eine 3D-Kamera, liefert neben einem zweidimensionalen Bild des Umgebungsbereichs gleichzeitig eine Tiefeninformation zu dem aufgenommenen Bild. Die Tiefeninformation wird beispielsweise in einer Laufzeitmethode ermittelt, wobei die Zeitspanne zwischen dem Aussenden eines Lichtpulses und dem Eintreffen eines reflektierten Lichtpulses ermittelt und in eine Entfernung zwischen dem Sensorsystem und dem reflektierenden Gegenstand umgerechnet wird. Demnach liefert ein solches System direkt alle notwendigen Daten zur Auswertung der Abmessungen des zum Einparken zur Verfügung stehenden Raumes. Eine aufwendige Bildbearbeitung zur Detektion und gegebenenfalls zur Eliminierung eines störenden Hintergrundes kann hierdurch entfallen. In der Tat wird mit dem 3D-Sensorsystem ein nicht interessierender Hintergrund direkt ausgeblendet indem der aufzunehmende Außenbereich des Fahrzeugs bereits bei der Aufnahme der Umgebungsdaten in seiner Tiefe beschränkt wird. Hierdurch verringert sich der Rechenaufwand zur Bildauswertung erheblich so dass ein nach dem vorgeschlagenen Verfahren arbeitendes System mit einer vergleichsweise bescheidenen und demzufolge günstigen Hardwareausstattung auskommt.

In einer möglichen Ausgestaltung des Verfahrens umfasst die Aufnahme von Umgebungsdaten die Aufnahme eines Situationsbildes des gesamten interessierenden Bereichs, d.h. eine mögliche Parklücke wird komplett von dem optischen 3D-Sensorsystem aufgenommen. Dieses Verfahren kann sowohl während des Vorbeifahrens des Fahrzeugs an der potenziellen Parklücke erfolgen als auch von dem stehenden Fahrzeug aus erfolgen, wenn dieses beispielsweise in unmittelbarer Nähe zu der potenziellen Parklücke anhält. Bei einer solchen Nahfeldbetrachtung, die beispielsweise mittels eines Weitwinkelobjektivs erfolgen kann, reicht eine einzige Bildaufnahme, um alle relevanten Eigenschaften der potenziellen Parklücke zu erfassen. Der optische 3D-Sensor umfasst eine Vielzahl von Bildpunkten, von denen jeder die Distanz zu eventuellen Objekten in seinem Sichtfeld detektiert. Der Sensor liefert hierdurch innerhalb des Messbereichs direkt eine topographische Information über den Außenbereich des Fahrzeugs. Die Bildauswertung kann bei diesem Verfahren folglich auf die Auswertung eines einzelnen Situationsbildes beschränkt werden, wodurch der Prozessaufwand für die Bildauswertung minimiert wird.

In einer anderen Ausgestaltung des Verfahrens umfasst die Aufnahme von Umgebungsdaten die aufeinanderfolgende Aufnahme von nebeneinanderliegenden Teilbildem des interessierenden Bereichs, d.h. der interessierende Bereich wird von dem 3D-Sensorsystem gescannt. Bei dieser Ausgestaltung wird der interessierende Bereich in eine Vielzahl von schmalen Teilbereichen unterteilt, die nacheinander von dem Sensorsystem aufgenommen und anschließend zur Bestimmung der Abmessung der Parklücke zusammen ausgewertet werden. Da die einzelnen Teilbilder im Gegensatz zu einem gesamten Situationsbild der Parklücke vergleichsweise weniger Informationen enthalten, kann bei dieser Ausgestaltung des Verfahrens die Zahl der Bildpunkte des Sensorsystems verringert werden, ohne dass sich das Gesamtauflösungsvermögen der Vorrichtung verschlechtert. Dies bedeutet, dass das Sensorsystem entsprechend kostengünstiger ist. Bei Verwendung eines Sensorsystems mit einer hohen Zahl von Bildpunkten kann alternativ mit einem solchen Verfahren das Auflösungsvermögen des Systems gesteigert werden, so dass sich eine bessere Erkennung von eventuellen Hindernissen ergibt.

Es ist anzumerken, dass bei der vorgeschlagenen Variante des erfindungsgemäßen Verfahrens jedes Teilbild im allgemeinen alle Tiefeninformationen im Zusammenhang mit dem aufgenommen Teilbereich enthält. Um die Länge der potenziellen Parklücke zu bestimmen, muss zusätzlich zu den aufgenommenen Teilbildern die Scangeschwindigkeit ermittelt werden um ein topographisches Bild des bestimmten Bereichs erstellen zu können. Die vorgeschlagene Ausgestaltung des Verfahrens wird beispielsweise während des Vorbeifahrens des Fahrzeugs an der potentiellen Parklücke eingesetzt, wobei die momentane Geschwindigkeit des Fahrzeugs beim Vorbeifahren ermittelt und als Scangeschwindigkeit bei der Auswertung der einzelnen Teilbilder berücksichtigt wird. Die einzelnen nacheinander aufgenommenen Teilbilder des interessierenden Bereichs können dann über eine ermittelte Fahrzeuggeschwindigkeit miteinander korreliert werden. Alternativ kann das 3D-Sensorsystem verschwenkbar angeordnet sein, so dass ein Scannen des interessierenden Bereichs durch Verschwenken des Sensorsystems auch bei einem stehenden Fahrzeug möglich ist.

Wie oben bereits beschrieben, eignet sich ein optisches 3D-Sensorsystem aufgrund der direkt ermittelten Entfernungsdaten von einzelnen Bildinformationen hervorragend zur Ermittlung der Abmessungen eines bestimmten Bereichs. Darüber hinaus kann jedes Hindernis, das sich innerhalb des Messbereichs des Sensorsystems befindet, anhand der mitgelieferten Entfernungsinformationen mit hoher Genauigkeit orten. In einer vorteilhaften Ausgestaltung der Erfindung wird letztere Eigenschaft ausgenutzt um auf der Basis der aufgenommenen Umgebung ein Hindernis in dem bestimmten Bereich zu detektieren. Dabei kann mittels einer geeigneten Auslegung des Sensorsystems sogar ermittelt werden, ob es sich bei dem Hindernis um ein unbewegliches Hindernis handelt, was die Verwendung des bestimmten Bereichs als Parklücke im allgemeinen ausschließt, oder ob das Hindernis beweglich ist, was die Verwendung als Parklücke nicht unbedingt ausschließt.

Anhand der ermittelten Abmessungen der potentiellen Parklücke und bekannter, fahrzeugspezifischer Referenzwerte kann die Auswerteeinheit bewerten, ob das Fahrzeug in die potenzielle Parklücke passt. Ist diese Bewertung erfolgt, kann deren Resultat dem Fahrer des Fahrzeugs als Hinweis gemeldet werden, den Einparkvorgang zu versuchen bzw. abzubrechen und eine andere Parklücke anzufahren. Die Auswerieehinchtung ist dazu vorzugsweise mit einem Informationssystem zur Ausgabe eines Resultats des Bewertungsschritts an einen Fahrer des Fahrzeug gekoppelt. Die Ausgabe des Resultats kann beispielsweise optisch auf einem im Fahrzeuginnenraum angeordneten Bildschirm erfolgen. Alternativ oder zusätzlich kann das Resultat optisch mittels Signalleuchten im Armaturenbrett angezeigt und/oder akustisch als Signalton oder als Sprachausgabe und/oder mechanisch z.B. durch eine Vibration des Lenkrads übermittelt werden.

Es ist anzumerken, dass anhand der aufgenommenen Umgebungsden eine Positionsbestimmung einer Parklücke bezüglich des Faherzeugs erfolgen kann. Diese Positionsbestimmung kann mit geringem Aufwand zusätzlich zu der Berechnung der Abmessungen des bestimmten Bereichs durchgeführt werden. Ist die Auswerteeinrichtung an ein Steuerystem für ein automatisches Einparksystem gekoppelt (Sensorfusion), so können die ermittelten Abmessungs- und Positionsdaten an dieses Steuersystem übermittelt und bei dem automatischen Einparkvorgang benutzt werden.

In einer bevorzugten Ausgestaltung arbeitet die Sensoreinrichtung im Infrarotbereich. Das optische 3D-Sensorsystem umfasst dann vorteilhaft eine gepulste IR-Beleuchtungsquelle und einen im IR-Bereich empfindlichen Bildsensor, zur Aufnahme der im Außenbereich des Fahrzeugs reflektierten Lichtpulse.

Es ist anzumerken, dass das optische 3D-Sensorsystem vorzugsweise im Außenbereich des Fahrzeugs an diesem montiert ist. Eine geeignete Position am Fahrzeug ist beispielsweise der Außenspiegel an der Beifahrerseite des Fahrzeugs. Alternativ kann das Sensorsystem im Fahrzeug nach außen schauend angeordnet sein. Mögliche Einbauorte sind beispielsweise Kotflügel oder A-, B- oder C-Säule des Fahrzeugs. Das Sensorsystem, bzw. die gesamte Einparkhilfe ist vorzugsweise bei Bedarf von dem Fahrer aktivierbar, wobei das System gegebenenfalls lediglich unterhalb einer vorbestimmten Grenzgeschwindigkeit aktiv wird.

### Detaillierte Beschreibung anhand der Figuren

Im folgenden wird eine Ausgestaltung der Erfindung anhand der beiliegenden Figuren beschrieben. Es zeigen:
- Fig.1:: eine schematische Draufsicht auf eine mögliche Parksituation für einen Personenkraftwagen;
- Fig.2:: Eine schematische Darstellung des Algorithmus einer Laufzeitmethode (Time of Flight);
- Fig.3:: ein Blockdiagram eines 3D-Sensorsystems

Ziel der vorliegenden Erfindung ist es, freie Parklücken zu erkennen, die für das Fahrzeug an dem das System montiert ist geeignet sind. Die Erkennung kann dabei sowohl bei stehendem Fahrzeug als auch bei vorbeifahrendem Fahrzeug erfolgen.

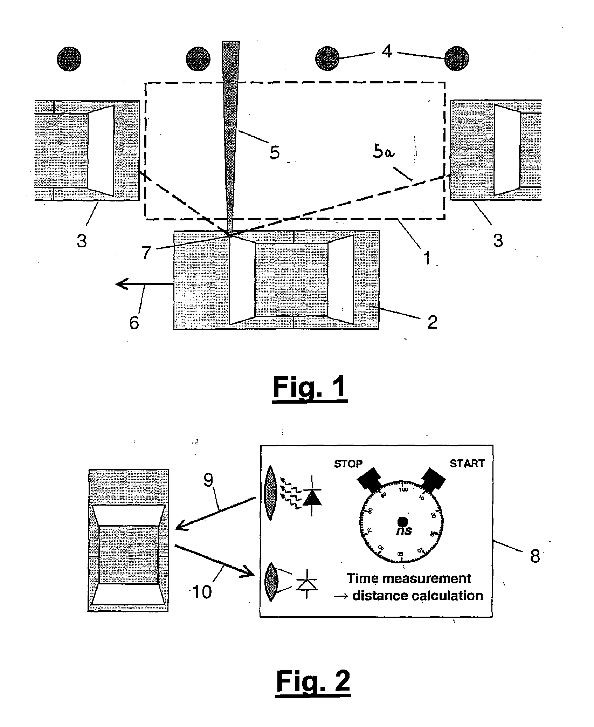

Fig.1 zeigt eine typische Parksituation. Das Fahrzeug 2 fährt entlang einer Straße. Der Rand der Straße ist durch senkrechte Hindernisse 4 begrenzt, z.B. Bäume auf einem Bürgersteig. Entlang des Bürgersteigs sind zwei weitere Fahrzeuge 3 geparkt, zwischen denen eine Parklücke 1 erkennbar ist.

Der Fahrer von Fahrzeug 2 möchte diese Parklücke benutzen. Dazu muss er zunächst abschätzen ob die Abmessungen der Parklücke 1 ausreichen um ein Einparken des Fahrzeugs 2 zu erlauben, natürlich ohne die Fahrzeuge 3 zu berühren. Diese Auswertung der Parklücke erfolgt vorzugsweise nach einem Verfahren entsprechend der vorliegenden Erfindung.

In der dargestellten Ausgestaltung des Verfahrens, werden die Abmessungen der Parklücke während des Vorbeifahrens des Fahrzeugs 2 an der Parklücke 1 bestimmt. Hierzu nimmt ein an einem beifahrerseitigen Außenbereich, z.B. am Außenspiegel 7, des Fahrzeugs angeordnetes optisches 3D-Sensorsystem nacheinander verschiedene nebeneinander liegende Teilbilder der Parklücke auf. Jedes der Teilbilder umfasst alle topographischen Informationen aus dem jeweils aufgenommenen schmalen Bereich 5 der Parklücke 1. Dies bedeutet, dass die Parklücke 1 beim Vorbeifahren des Fahrzeugs 2 von dem 3D - Sensorsystem gescannt wird. Jedes der Teilbilder kann für sich gesondert ausgewertet werden, um ein eventuelles Hindernis in dem jeweiligen Teilbereich der Parklücke zu erkennen. Die Länge der verfügbaren Parklücke 1 kann anhand der Fahrzeuggeschwindigkeit und gegebenenfalls der Scanfrequenz des 3D-Sensorsystems ermittelt werden, indem die Fahrstrecke zwischen zwei Teilbereichen, in denen ein Hindernis detektiert wurde, berechnet wird. Es ist anzumerken, dass die einzelnen Teilbilder ebenfalls zu einem Gesamtbild der Parklücke zusammengesetzt werden können, falls dies für eine weitere Bildauswertung notwendig sein sollte.

Die Tiefe des Messbereichs 5 ist vorzugsweise so eingestellt dass das 3D-Sensorsystem nur die zur Ermittlung der Parklückenabmessung notwendigen Informationen bearbeitet. In der gezeigten Ausgestaltung ist die Tiefe beispielsweise derart eingestellt, dass der Messbereich nur unwesentlich über eine hintere Begrenzung, z.B. eine Bordsteinkante, hinausreicht. Auf diese Weise können Hindernisse in unmittelbarer Nähe der Bordsteinkante, die beim Einparken eine reelle Gefahr darstellen, noch wirksam erkannt werden während ein auf den Bürgersteig stehender Fußgänger außerhalb des Messbereichs liegt. Die Einstellung der Messtiefe erfolgt vorzugsweise automatisch nachdem eine hintere Begrenzung der Parklücke, beispielsweise die Bordsteinkante, erfasst und deren Entfernung zum Sensorsystem ermittelt ist.

In einer alternativen Ausgestaltung des Verfahrens wird anstelle von Teilbildern der Parklücke ein Situationsbild der gesamten Parklücke mit dem Sensorsystem aufgenommen. Hält das Fahrzeug 2 an, beispielsweise unmittelbar neben Parklücke 1, kann das 3D-Sensorsystem mit Hilfe eines Weitwinkelobjektivs ein dreidimensionales Situationsbild der Parklücke 1 aufnehmen (Messbereich 5a, in Figur 1 gestrichelt dargestellt). Das 3D-Sensorsystem liefert dabei topographische Informationen über die vorhandene Parklücke, das heißt Informationen über die Höhe, Breite und Tiefe der Parklücke 1 werden unmittelbar von dem Sensorsystem erfasst. Das Situationsbild, bzw. die darin enthaltenen topographischen Informationen bezüglich der Parklücke, werden anschließend von der nicht dargestellten Auswerteeinheit verarbeitet um die Abmessungen der freien Parklücke zu bestimmen und die Eignung der Parklücke für das Fahrzeug 2 zu bewerten.

Falls die Bewertung der Eignung der Parklücke festgestellt wird, das heißt falls die Länge und die Tiefe der Parklücke 1 ein Einparken erlauben, kann dem Fahrer des Fahrzeugs 2 beispielsweise ein optisches oder akustisches Freigabesignal übermittelt werden.

Fig.2 veranschaulicht die Laufzeitmethode anhand derer die Tiefe eines Bildes durch ein 3D-Sensorsystem 8 ermittelt werden kann. Die Zeitspanne, dargestellt von der Stoppuhr, zwischen dem Aussenden eines Lichtpulses 9 und dem Eintreffen eines reflektierten Lichtpulses 10 wird ermittelt. Diese Zeitspanne wird anschließend in eine Entfernung zwischen dem 3D-Sensorsystem und dem reflektierenden Gegenstand umgerechnet. Neben der eigentlichen zweidimensionalen Bildinformation kann mit dieser Methode zu jedem Bildpunkt des Sensorsystems gleichzeitig eine Tiefeninformation ermittelt werden. Auf diese Art und Weise entsteht das topographische Bild der Parklücke.

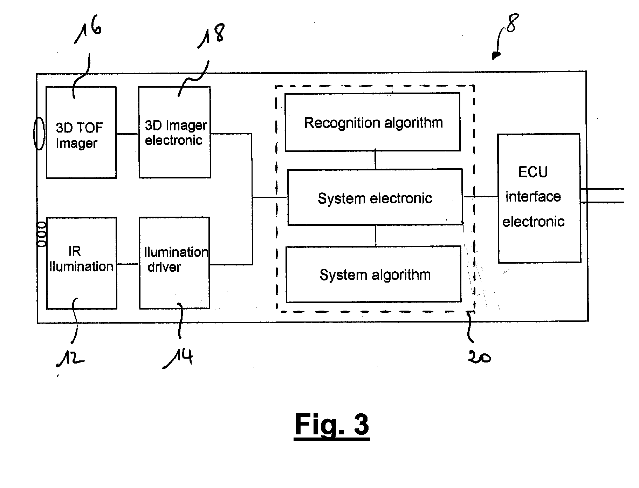

Fig.3 zeigt ein Blockschaltbild eines 3D-Sensorssystems 8. Dieses umfasst im wesentlichen eine Beleuchtungseinheit mit einer Lichtquelle 12 und einem zugeordneten Vorschaltgerät 14 sowie eine Bildaufnahmeeinheit mit einem Bildsensor 16 mit zugehöriger Treiberschaltung 18. Die Lichtquelle ist vorzugsweise eine IR-Lichtquelle, so dass das von ihr ausgesandte Licht für den Menschen nicht störend ist.

Die Beleuchtungseinheit und die Bildaufnahmeeinheit sind mit einer Steuer- und Auswerteelektronik 20 verbunden, die die Funktion der beiden Einheiten koordiniert und die aufgenommenen Situationsbilder verarbeitet.

### Referenzzeichenliste

- 1: Parklücke
- 2: Fahrzeug
- 3: parkende Fahrzeuge
- 4: Hindernisse
- 5, 5a: Messbereich des Sensorsystems
- 6: Fahrtrichtung des Fahrzeugs 2
- 7: Außenspiegel des Fahrzeugs
- 8: Sensorsystem
- 9, 10: Lichtwege bei Laufzeitmessung
- 12: Lichtquelle
- 14: Vorschaltgerät
- 16: Bildsensor
- 18: Treiberschaltung
- 20: Steuer- und Auswerteelektronik

## Patentansprüche

1. Verfahren zur Einparkhilfe für ein Fahrzeug, umfassend die Schritte
Aufnahme von Umgebungsdaten im Außenbereich eines Fahrzeugs,
Berechnung der Abmessungen eines bestimmten Bereichs unter Benutzung der aufgenommenen Umgebungsdaten, und
Bewerten der Eignung des bestimmten Bereichs als Parklücke unter Benutzung der berechneten Abmessungen und bekannter, fahrzeugspezifischer Referenzwerte,
**dadurch gekennzeichnet, dass** die Aufnahme von Umgebungsdaten die Aufnahme von dreidimensionalen Umgebungsbilden mittels eines optischen 3D-Systems umfasst.

2. Verfahren nach Anspruch 1, wobei die Aufnahme von Umgebungsdaten die Aufnahme eines Situationsbildes des gesamten interessierenden Bereichs umfasst.

3. Verfahren nach Anspruch 1 oder 2, wobei die Aufnahme von Umgebungsdaten die aufeinanderfolgende Aufnahme von nebeneinanderliegenden Teilbildern des interessierenden Bereichs umfasst.

4. Verfahren nach einem der Ansprüche 1 bis 3, wobei auf der Basis der aufgenommenen Umgebungsdaten ein topographisches Bild des bestimmten Bereichs erstellt wird.

5. Verfahren nach einem der vorhergehenden Ansprüche, wobei auf der Basis der aufgenommenen Umgebung ein Hindernis in dem bestimmten Bereich detektiert wird.

6. Verfahren nach einem der Ansprüche 1 bis 5, wobei ein Resultat des Bewertungsschritts an einen Fahrer des Fahrzeug gemeldet wird.

7. Verfahren nach einem der Ansprüche 1 bis 6, wobei zusätzlich zu der Berechnung der Abmessungen des bestimmten Bereichs eine Bestimmung der Position des bestimmten Bereichs bezüglich des Fahrzeugs auf der Basis der aufgenommenen Umgebungsdaten erfolgt.

8. Verfahren nach Anspruch 7, wobei die berechneten Abmessungen und Position des bestimmten Bereichs an ein Steuersystem für ein automatisches Einparksystem übermittelt wird.

9. Vorrichtung zur Einparkhilfe für ein Fahrzeug, umfassend eine Sensoreinrichtung zur Aufnahme von Umgebungsdaten im Außenbereich eines Fahrzeugs, und eine Auswerteeinrichtung zur Berechnung der Abmessungen eines bestimmten Bereichs auf der Basis der aufgenommenen Umgebungsdaten und zur Bewerten der Eignung des bestimmten Bereichs als Parklücke auf der Basis der berechneten Abmessungen und bekannter, fahrzeugspezifischer Referenzwerte, **dadurch gekennzeichnet, dass** die Sensoreinrichtung ein optisches 3D-Sensorsystem zur Aufnahme von dreidimensionalen Umgebungsbilden umfasst.

10. Vorrichtung nach Anspruch 9, wobei die Auswerteschaltung die Abmessungen des bestimmten Bereichs auf der Basis eines Situationsbildes des gesamten interessierenden Bereichs ermittelt.

11. Vorrichtung nach Anspruch 9 oder 10, wobei die Auswerteschaltung die Abmessungen des bestimmten Bereichs auf der Basis von mehreren nacheinander aufgenommenen Teilbildern des interessierenden Bereichs ermittelt, wobei die verschiedenen Teilbilder über eine ermittelte Fahrzeuggeschwindigkeit miteinander korreliert werden.

12. Vorrichtung nach einem der Ansprüche 9 bis 11, wobei die Sensoreinrichtung im Infrarotbereich arbeitet.

13. Vorrichtung nach einem der Ansprüche 9 bis 12, wobei die Auswerteeinrichtung mit einem Informationssystem zur Ausgabe eines Resultats des Bewertungsschritts an einen Fahrer des Fahrzeug gekoppelt ist.

14. Vorrichtung nach einem der Ansprüche 9 bis 13, wobei die Auswerteeinheit Mittel zum Ermitteln der Position des bestimmten Bereichs bezüglich des Fahrzeugs aufweist.

15. Vorrichtung nach Anspruch 14, wobei die Auswerteeinrichtung zur Übermittlung von Abmessungs- und Positionsdaten des bestimmten Bereichs an ein Steuersystem für ein automatisches Einparksystem gekoppelt ist.

16. Vorrichtung nach einem der Ansprüche 9 bis 15, **dadurch gekennzeichnet, dass** das optische 3D-Sensorsystem im Außenbereich des Fahrzeugs an diesem montiert ist.
